# EUROPEAN PATENT APPLICATION

(11) **EP 1 048 877 A1**
(43) Date of publication of application: **02.11.2000**
(21) Application number: 00109361.6
(22) Date of filing: 02.05.2000
(51) Int. Cl.: F16H 1/16, H02K 7/116

(54) **Motor with worm speed reducer**

(30) Priority: 30.04.1999 IT BO990052 U
(71) Applicant: Bonfiglioli Riduttori S.p.A., 40012 Calderara di Reno (IT)
(72) Inventor: Cognigni, Enzo, 40129 Bologna (IT); Depietri, Pietro, 40141 Bologna (IT)
(74) Representative: Eccetto, Mauro

(57) **Abstract**

A motor reducer (1) having a drive unit (2), and a worm-spiral gear reducer (3) in turn having a worm (6) and a spiral gear (8); the motor reducer (1) being characterized in that a shaft (14; 14a) of the drive unit (2) and a shaft (7; 14a) of the reducer (3) are supported by at most three bearings (17, 18, 24; 17a, 18a), so that the drive unit (2) and the reducer (3) as a whole form a compact motor reducer (1).

## Description

The present invention relates to a motor reducer comprising a worm-spiral gear reducer.

As is known, two oblique shafts may be rotated using a motor reducer comprising a worm-spiral gear reducer and a drive unit.

For example, in the motor reducer described in US Patent US-A-4 185 514 (Edwards), a drive unit rotates an oblique shaft fitted with a spiral gear by means of an adapter interposed between the drive unit and the worm-spiral gear reducer. More specifically, the shaft of the drive unit is fitted with a pulley which, in the usual way by means of a belt, rotates a shaft of the adapter which in turn transmits motion to the reducer.

The above motor reducer, however, has the disadvantage of failing to provide for a low level of vibration, on account of the adapter shaft being supported by a pair of bearings, and motion being transmitted initially by a belt with respective pulleys. Moreover, the motor reducer itself is fairly bulky, is expensive to produce, and comprises a large number of components.

It is a principal object of the present invention to provide a motor reducer featuring extremely compact structural elements, so as to ensure a low level of vibration and reduce the number of structural elements themselves; all of which automatically result in lower manufacturing cost and a high degree of reliability of the finished product.

According to the present invention, there is provided a motor reducer comprising a drive unit, and a worm-spiral gear reducer in turn comprising a worm and a spiral gear; the motor reducer being characterized in that a shaft of the drive unit and a shaft of the reducer are supported by at most three bearings, so that the drive unit and the reducer as a whole form a compact motor reducer.

One particular embodiment of the present invention provides for constructing a motor reducer comprising a worm-spiral gear reducer wherein an adapting element is provided between the drive unit and the reducer.

One of the advantages of such a motor reducer lies in the drive unit shaft and the shaft fitted with the reducer worm being connected maintaining, for a given series, a constant diameter of the reference dead hole on the worm shaft, and by simply varying the diameter of the adapting element according to the diameter of the drive unit shaft.

This provides for a drastic reduction in the number of types of reducers to be kept in stock. In fact, reducers with the same dead hole diameter for a whole series of drive unit shaft diameters may be manufactured at a centralized facility, and local facilities may manufacture the adapting elements, which may vary widely from one place to another according to different user requirements and, possibly also, different standards.

In one particular embodiment of the present invention, the dead hole on the worm shaft and the adapting element are connected by means of a splined or lobed coupling.

Further advantages of the reducer according to the present invention lie in the increased diameter of the reference hole for a given standard series resulting in an increase in the diameter of the worm shaft and, hence, an increase in the overall diameters of the end bearings, so that both economic and technical advantages are to be gained by using straightforward ball bearings as opposed to high-cost roller bearings.

A number of non-limiting embodiments of the present invention will be described by way of example with reference to the accompanying drawings, in which:
Figure 1 shows a first embodiment of the motor reducer according to the present invention;
Figure 2 shows a second embodiment of the motor reducer according to the present invention.

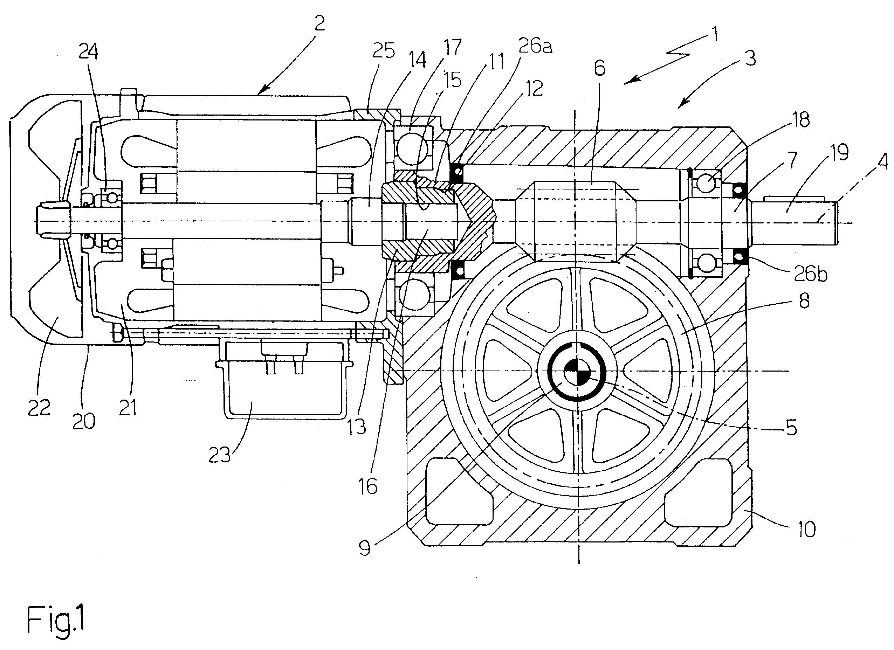

Number 1 in Figure 1 indicates as a whole a worm-spiral gear motor reducer comprising a drive unit 2 and a reducer 3 for transmitting rotation between two oblique perpendicular axes 4 and 5. Reducer 3 in turn comprises a worm 6 having a first shaft 7 coaxial with axis 4; and a spiral gear 8 fitted to a second shaft 9 coaxial with axis 5. Worm 6, spiral gear 8 and respective shafts 7, 9 are substantially housed inside a casing 10. A dead hole 12 is formed at a first end 11 of first shaft 7, and is engaged by a substantially cylindrical element 13 for adapting dead hole 12 and a third shaft 14 of drive unit 2. As can be seen, third shaft 14 of drive unit 2 and first shaft 7 of reducer 3 have the same longitudinal axis 4 of symmetry.

Dead hole 12 and element 13 may advantageously be connected by means of a splined coupling or, according to a variation, by means of a lobed coupling.

Element 13 is therefore substantially housed inside dead hole 12, and in turn comprises a through hole 15 and mechanical means (not shown in Figure 1) for connecting element 13 to a first end 16 of third shaft 14 of drive unit 2. Through hole 15 and end 16 of third shaft 14 may obviously be connected by means of a mechanical interface or adhesives.

The bearings used, indicated 17 and 18, are advantageously ball bearings, which are cheaper and easier to assemble.

To complete drive unit 2, a casing 20 is provided, which, in addition to third shaft 14, also houses electric windings 21, a cooling fan 22 fitted to third shaft 14, and electric connecting means 23. As can be seen, third shaft 14, besides being supported by bearing 17 at first end 16, is also supported at a second end by a further bearing 24 in turn supported by casing 20 and which may also advantageously be a ball bearing.

Casing 20 of drive unit 2 is fitted to casing 10 of reducer 3 by a flange 25 integral with casing 20 and fitted by conventional means (not shown) to casing 10 so as to close the seat of bearing 17.

Casing 10 is provided with a pair of sealing rings 26a, 26b for sealing the lubricating oil inside the casing.

This therefore provides for obtaining a motor reducer 1 comprising a highly compact worm-spiral gear reducer 3, and in which first end 11 of first shaft 7 of reducer 3 and first end 16 of third shaft 14 of drive unit 2 are supported by the same ball bearing 17, thus greatly simplifying the structure, and so reducing the overall size, of the motor reducer. The extreme compactness of the motor reducer as a whole also provides for greatly reducing vibration generated when transmitting rotation from third shaft 14 of drive unit 2 to second shaft 9 of reducer 3.

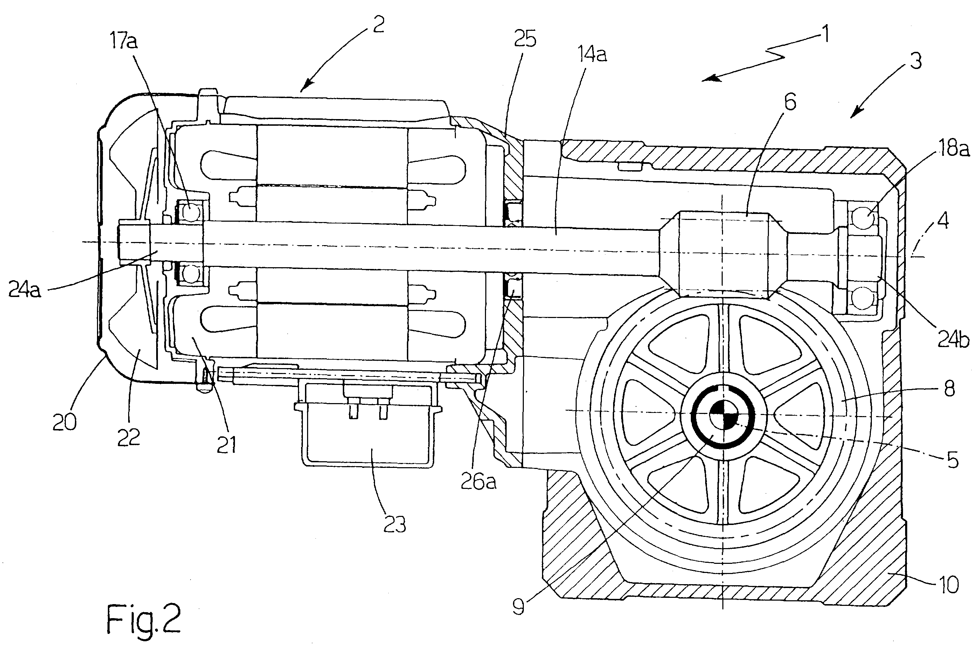

In the second embodiment shown in Figure 2, first shaft 7 of reducer 3 is formed in one piece with third shaft 14 of drive unit 2 to form a single shaft 14a.

In Figure 2, any elements similar or identical to those in Figure 1 are indicated using the same reference numbers.

The single shaft 14a is supported, at both ends 24a and 24b of shaft 14a, by respective bearings 17a and 18a in turn supported by known means by casing 20 of drive unit 2 and casing 10 of reducer 3 respectively. Both bearings 17a, 18a are advantageously ball bearings.

At flange 25, between drive unit 2 and reducer 3, a sealing ring 26a is provided to prevent lubricant leakage from casing 10 of reducer 3.

In a third embodiment not shown, bearing 17a, as opposed to being located at end 24a of shaft 14a as in the second embodiment shown in Figure 2, is fitted next to sealing ring 26a, between casing 20 of drive unit 2 and casing 10 of reducer 3, so that the third embodiment also comprises only two bearings 17a, 18a, a first at flange 25 and a second, as usual, at end 24b, as in the Figure 1 and 2 embodiments.

The third embodiment of the present invention must obviously also provide for a shaft 14a which acts as a supporting shaft for worm 6 and at the same time as a countershaft of drive unit 2.

The advantages of the present invention may be summed up as follows:
- improved alignment of the motor reducer shafts;
- improved overall efficiency of the drive unit;
- uniform rotation;
- fewer moving elements as compared with known motor reducers;
- low-loss mechanical power transmission, by reducing the number of moving elements; and
- low noise level by reducing power transmission vibration.

Operation of the motor reducer according to the present invention is clearly deducible from the foregoing description with no further explanation required.

## Claims

1. A motor reducer (1) comprising a drive unit (2), and a worm-spiral gear reducer (3) in turn comprising a worm (6) and a spiral gear (8); the motor reducer (1) being characterized in that a shaft (14; 14a) of said drive unit (2) and a shaft (7; 14a) of said reducer (3) are supported by at most three bearings (17, 18, 24; 17a, 18a), so that said drive unit (2) and said reducer (3) as a whole form a compact motor reducer (1).

2. A motor reducer (1) as claimed in Claim 1, wherein two bearings (17, 18) are housed in a casing (10) of said reducer (3), and wherein one bearing (24) is housed in a casing (20) of said drive unit (2).

3. A motor reducer (1) as claimed in any one of the foregoing Claims, wherein each bearing (17, 18, 24; 17a, 18a) is a ball bearing.

4. A motor reducer (1) as claimed in Claim 1 or 3, wherein said shaft (14) of said drive unit (2) is formed in one piece with said shaft (7) of said reducer (3) so as to form a single shaft (14a).

5. A motor reducer (1) as claimed in Claim 4, wherein said single shaft (14a) is supported by two bearings (17a, 18a).

6. A motor reducer (1) as claimed in Claim 5, wherein each of said two bearings (17a, 18a) is located at a respective end (24a, 24b) of said single shaft (14a).

7. A motor reducer (1) as claimed in Claim 5, wherein a first bearing (17a) is located between said drive unit (2) and said reducer (3), and a second bearing (18a) is located at one end (24b) of said single shaft (14a).

8. A motor reducer (1) as claimed in Claim 1, wherein an adapting element (13) is located between one end (11) of said shaft (7) of said reducer (3) and one end (16) of said shaft (14) of said drive unit (2).

9. A motor reducer (1) as claimed in Claim 8, wherein a dead hole (12) is formed at said end (11) of said shaft (7) of said reducer (3); said adapting element (13) and said dead hole (12) being connected by means of a splined coupling.

10. A motor reducer (1) as claimed in Claim 8, wherein a dead hole (12) is formed at said end (11) of said shaft (7) of said reducer (3); said adapting element (13) and said dead hole (12) being connected by means of a lobed coupling.
